# EUROPEAN PATENT SPECIFICATION

(11) **EP 2 223 585 B1**
(45) Date of publication and mention of the grant of the patent: **11.07.2012**
(21) Application number: 10152661.4
(22) Date of filing: 04.02.2010
(51) Int. Cl.: A01C 11/02

(54) **Transplanting apparatus**
Pflanzvorrichtung
Transplanteur

(30) Priority: 04.02.2009 US 206804 P; 24.08.2009 US 274988 P
(43) Date of publication of application: 01.09.2010
(73) Proprietor: Faulring Mechanical Devices, Inc, North Collins, NY 14111 (US); The Morning Star Company, Woodland, CA 95776 (US)
(72) Inventor: Faulring, Frank W., North Collins, NY 14111 (US); Gill II, Robert Chope, Woodland, CA 95776 (US); Gobel, Jonathan C., Willows, CA 95988 (US)
(74) Representative: Freischem, Stephan

(56) References cited:
- EP-A1- 0 390 289
- DE-T2- 69 810 416
- US-A- 4 869 637
- US-A- 5 765 491
- US-B1- 6 327 986

## Description

### CROSS-REFERENCE TO RELATED APPLICATIONS

This application claims priority from U.S. provisional patent application 61/206,804 filed February 4, 2009 and U.S. provisional patent application 61/274,988 filed August 24, 2009.

### TECHNICAL FIELD

The present invention relates generally to transplanting apparatus, and more particularly to one which can plant virtually 100% of the seedlings from a nursery tray, while avoid skips when planting which may happen when seeds in a tray row fail to grow into seedlings. This is accomplished by picking up an entire row of seedlings from a tray, transferring the seedlings to a mechanism which eliminates gaps between seedlings, and then discharging the seedlings one at a time to the ground with a desired spacing between the seedlings while having 100% control of the seedlings.

### BACKGROUND OF THE INVENTION

Transplanting apparatus is well known in the art. Typical transplanters, which transplant from a plant tray, are shown in U.S. patents 4,644,880; 5,431,116; 5,573,558; 5,676,072; 6,073,564; and 6,634,306. Frequently there are skips between seedlings which may occur when seeds in a tray row fail to grow into seedlings. Transplanters which try to eliminate skips include U.S. patent No. 6,327,986 which discloses three separate sets of sensors to look for plant skips and advance a root ball chamber belt assembly one cell to make up for skips and eject the deficient root ball at the same time. U.S. Patent No. 6,080,951 discloses another approach to overcome the seedling tray skip problem. These approaches rely heavily on the accuracy of detectors to sense the presence of plant foliage. Considering the chaotic nature of the foliage and the necessary speed to be efficient, there is substantial room for error in these systems. Prior U.S. published application No. US-2009-0031935-A1 uses conveyor belts which push together the root balls of the rows of plants extracted from a plant tray.

Unfortunately, the root balls in a tray, when received at the transplanter, are not always firm and fully packed, making the subsequent handling somewhat difficult. Thus the root ball may tip over when placed on a conveyor belt. In addition, it may be difficult for a pinch disk to grab the root ball.

In U.S. published application No. US-2009-0031935-A1, the subject matter of which is incorporated herein by reference thereto, after gaps between seedlings have been eliminated, individual seedlings pass through a drop tube to a mechanism for discharging the seedlings one at a time to the ground with a desired spacing between the seedlings.

It is a feature of the foregoing patent application that the transplanter has a forward pair of transfer disks; a rear pair of planter disks; and an air knife mounted adjacent the forward pair of transfer disks for extending the stem and foliage of a seedling while in the forward pair of transfer disks for proper engagement by the rear pair of planting disks. It has been found that approximately 95% of seedlings will pass through a drop-tube type planter system without issues. The last 5% consists of plants with poor root systems, crooked stems, dwarfed size and soft stems. These types of plants tend to drag on the side of the drop tube and travel slowly because the soil has dislodged from the root ball or tipped over because of the soft stems. This results in skips and drop tube plugging issues.

### OBJECTS AND SUMMARY OF THE INVENTION

It is an object of the present invention to overcome the problems which occur when trying to transplant poor quality seedlings, which may have poor quality root balls, crooked stems, dwarfed size, tangled foliage, soft stems, etc.

More particularly it is an object of this invention to provide a transplanting method for transplanting seedlings grown in trays having a plurality of side-by side rows of seedling cells, which method plants the seedlings uniformly apart even though not all cells have seedlings, the method including the steps of picking up an entire row of seedlings from a tray by engaging the stems of the seedlings, which row in the tray may have gaps between seedlings, transferring the seedlings to a mechanism which eliminates gaps between seedlings, and, maintaining control of each seedling as it is moved from the mechanism which eliminates gaps to the ground one at time with a desired spacing between the seedlings to a mechanism which plants the seedlings; whereby the seedlings are planted uniformly spaced apart in the ground.

It is a further object of the present invention to provide a transplanting apparatus for transplanting seedlings grown in trays having a plurality of side-by side rows of seedling cells, which transplanting apparatus plants the seedlings uniformly apart even though not all cells have seedlings, the transplanting apparatus having means for picking up an entire row of seedlings from a tray by engaging the stems of the seedlings, having means for eliminating gaps between seedlings, and having means for discharging and planting the seedlings while maintaining control of the seedling as they are moved from the means for eliminating gaps until they are planted.

It is an additional object of the present invention to provide a transplanting apparatus of the type set forth above with means for compressing the root balls along their length so they can be handled better, the compressing means being located between the means for eliminating gaps and the transferring means.

The above and other objects and advantages of this invention will become more apparent from a consideration of the following detailed description taken in conjunction with the accompanying drawings in which a preferred form of the invention is illustrated.

### BRIEF DESCRIPTION OF THE FIGURES

In the following views right hand and left hand reference is determined by standing behind the transplanter and facing its direction of travel. In addition, terms such as raised and downwardly are with reference to the parts as shown in the various views.
FIG. 1 is a left side elevational view of a one row transplanter of this invention mounted behind a tractor, this view showing the mechanism for picking up an entire row of seedlings from a tray, transferring the seedlings to a mechanism which eliminates gaps between seedlings, and a discharge and planting mechanism for discharging the seedlings one at a time to the ground with a desired spacing between the seedlings, some parts not being illustrated.
FIG. 2 is a side view showing a number of seedlings on gap up belts with the cut-off gate extended to its raised position, and the root ball pinchers retracted, permitting the row plants to travel up to the cut-off gate and to gap up any missing plants, a root ball compressor and cut-off knives being shown in their raised retracted position.
FIG. 3 is a partial section taken generally along the line 3-3 in FIG. 2.
FIG. 4 is a side view, similar to FIG. 2, but showing the cut-off gate retracted, the trash knives extended downwardly, the overhead root ball compressor extended downwardly to crush the root balls to approximately ¾ of their original length, the first set of inverter disks gripping a single root ball, and the root ball pinchers extended to secure all root balls on the gap-up belts.
FIG. 5 is a section taken generally along the line 5-5 in FIG. 4.
FIG. 6 is a view similar to FIG. 1, but on a larger scale, some nonessential parts not being shown.
FIGS. 7 and 8 show the transplanter of this invention when planting 5 inch seedlings, FIG. 7 showing the planter subframe when planting in a seedbed which is raised above the tractor wheels, and FIG. 8 showing the planter subframe when planting in a flat field.
FIGS. 9 and 10 are views similar to FIGS. 7 and 8, but showing the transplanter of this invention when planting 9 inch seedlings.

### DETAILED DESCRIPTION

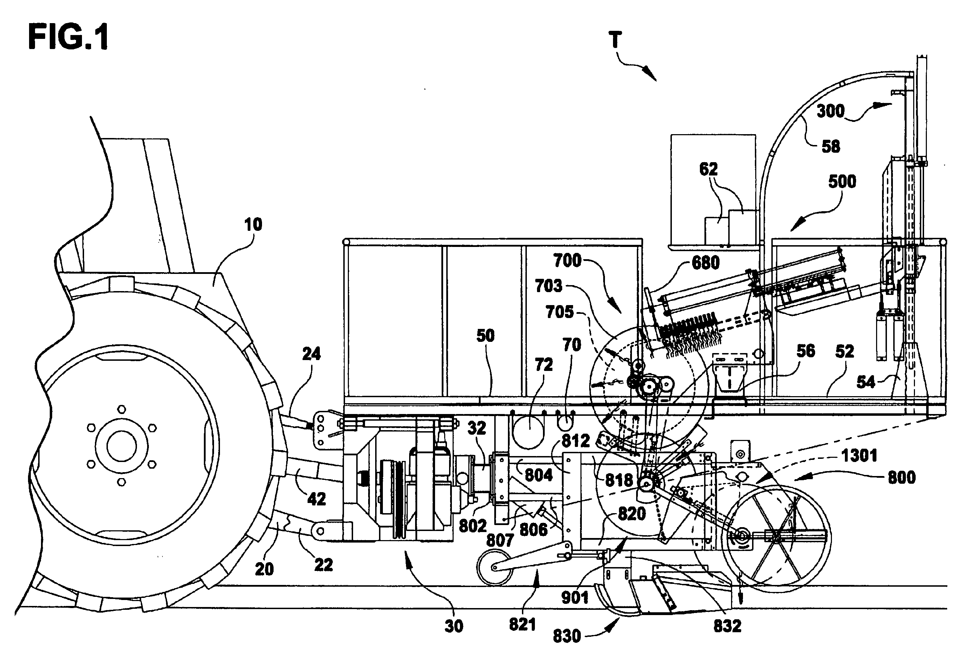

The transplanter of this invention is indicated generally at "T" in FIG. 1. It may be semi-integrally mounted on the three point hitch 20, 22, 24 of a tractor 10, only a portion of which is shown in FIG. 1. A box-like subframe indicated generally at 30 is in turn carried by the three point hitch. Mounted on the back of the subframe 30 is a tool bar 32 which in turn carries a pivoted sub-frame, not shown, for supporting wheels, also not shown. Each of the wheels may be moved up and down. As this design is conventional, it is not illustrated.

Mounted on the sub-frame 30 are high volume and high pressure air compressors, a 24 volt alternator, and a 24 volt battery source, the compressors and alternator being powered by the PTO shaft 42 of the tractor 10. The transplanter includes an operator support or platform 50. Mounted on the operator support 50 is a horizontal transplanter subframe 52. This in turn carries vertical subframe assemblies indicated generally at 54 and 56. An arched subframe 58 extends from a location above the top of the vertical subframe 54 forwardly and downwardly to a location adjacent subframe 56. The arched subframe 58 carries many air lines and electrical controls, not shown. In addition, control modules 62 may be mounted on the subframe 58. A high pressure air reservoir 70 and a low pressure air manifold 72 are carried below the platform 50.

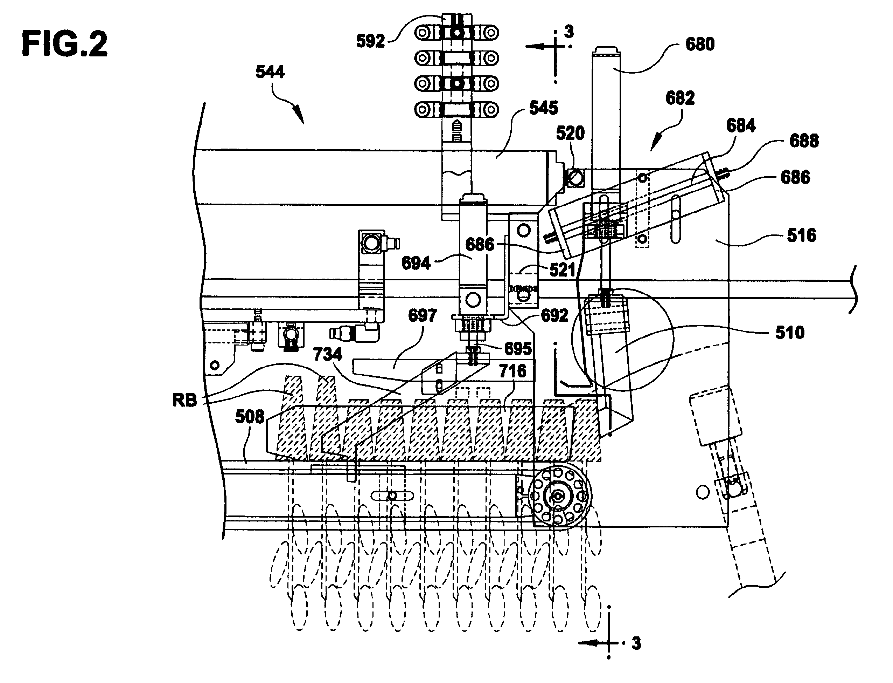

The transplanter consists of several major subassemblies. A first major subassembly is the tray indexing mechanism (not shown). The subassembly for picking up an entire row of seedlings from a tray is indicated generally at 300. These various components of the transplanter of this invention will not be discussed in detail as they are adequately discussed in US published application 2009-0031935-A1. The subassembly which eliminates gaps between seedlings is indicated generally at 500 and includes continuously running gap-up belts 506, 508, and a cut-off gate 510, as shown in FIGS. 2-5. These various components will be discussed in detail below. In addition to the above, there is a planter assembly, which plants individual seedlings in the ground, the planter assembly including a planter frame subassembly indicated generally at 800, which frame subassembly supports furrow opening and closing mechanisms.

### GAP ELIMINATING SUBASSEMBLY

The subassembly which eliminates gaps between seedlings and which compresses the root balls is best illustrated in FIGS. 2-5. The gap eliminating subassembly includes a plant transfer carriage or seedling loader group, which group carries root ball which will engage the root balls RB of the seedlings and move them towards and over a pair of gap-up belts 506, 508 which run continuously during the operation of the apparatus of this invention. As the root ball loaders of this invention are more fully described in US published application 2009-0031935-A1, they will not be described in detail here. When the root balls of the seedlings are fully positioned over the gap-up belts, they will be released by the root ball loaders, and the tops of the root balls, which are in an upside-down position, will rest on the gap-up belts for movement towards a cut-off gate 510. The cut-off gate will be operated in a suitable manner to release one seedling at a time, which seedling will be picked up by a discharge mechanism, or inverter disk assembly 700, which includes outer and inner disks 703, 705 best shown in FIG. 1.

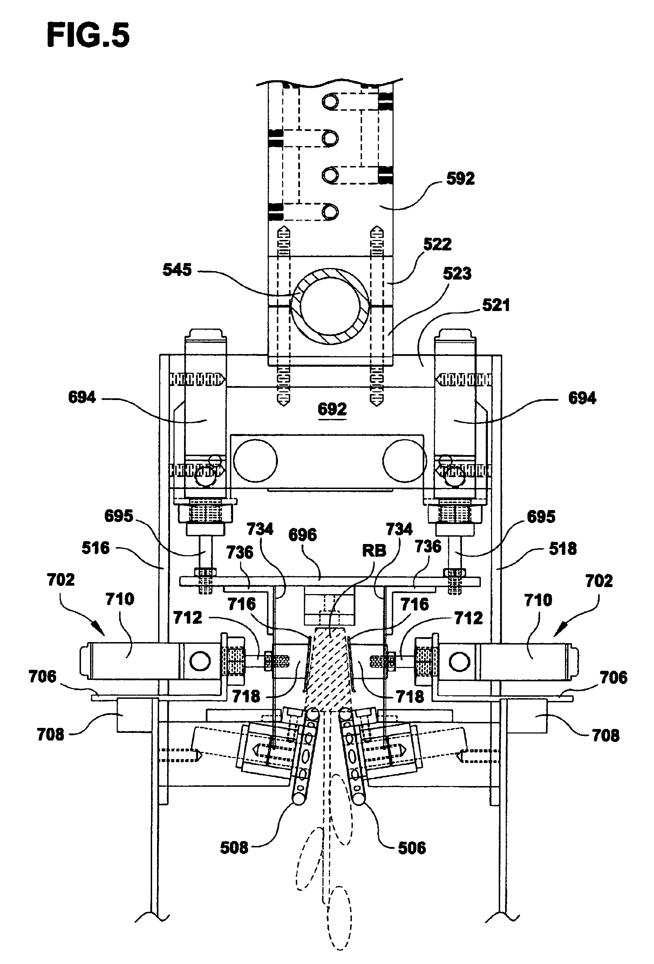

The root ball loaders are moved between a forward position and a rear position by an air cylinder assembly 544, which includes cylinder 545. The anchor end of cylinder 545 is supported by a transverse structure 520 which is in turn supported by right and left side plates 516, 518. An air manifold block 592 is supported on the cylinder 545 by upper and lower clamps 522, 523 as shown in FIG. 5.

As set forth above, the gap-up belts 506, 508 are driven continuously during the operation of the machine and will cause the root balls RB placed on the belts to move towards a cut-off gate 510, closing up the root balls and eliminating any gaps between the root balls which may be caused by seeds failing to germinate, or the like. More particularly, the cut-off gate 510 has the function of stopping the lead root ball so that next trailing root ball will press against the leading root ball, thus eliminating any gaps. In addition, the cut-off gate will be operated to release individual root balls at precise intervals to insure that proper planting spacing may be achieved. In the illustrated embodiment, the single cut-off gate 510 is operated by a pair of double acting air cylinders 680, only one of which is shown, which cylinders are supported for adjustable longitudinal fore and aft movement by a carriage assembly 682 supported for adjustable movement on a pair of longitudinally extending rods 684 which are in turn supported by opposed plates 686. The plates are in turn supported on the right and left upper side plates 516, 518 in any suitable manner. A screw mechanism including a screw 688 may be used to adjust the position of the gate to accommodate root balls of differing diameters as differing nurseries use plant trays having differing sized cells.

According to this invention means are provided to compress the root balls while on the gap-up belts 506, 508. To this end an L-shaped bracket 692 is mounted on a further transverse structure 521 as shown in FIG. 5, upon which are mounted double acting air cylinder assemblies 694. The rods 695 of the cylinder assemblies are secured to a transverse plate 696 which carries at its lower end a longitudinally extending member 697 which may contact the root balls RB. Cut-off knives 734 are carried by L-shaped brackets 736 mounted on the transverse plate 696. As the root balls RB move towards the cut-off gate, the knives 734 will strip away excess trash which may be associated with the root balls. In addition, the knives will move up and down with the rood ball compressor 697, and this movement will facilitate the removal of the trash associated with the root balls

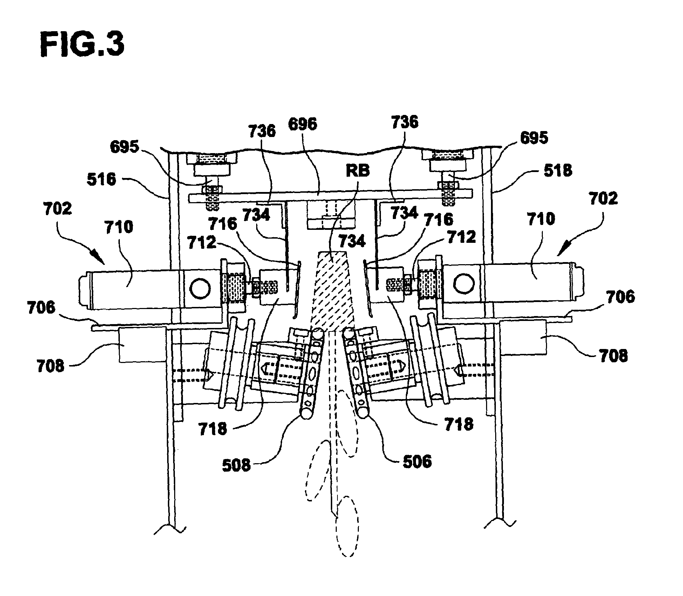

The operation of the cut-off gate cylinder assembly 680 is responsive to a PLC (or the equivalent) trigger input received from a wheel encoder processor, which is in turn responsive to a signal generated from a wheel encoder carried by a sensing wheel (not illustrated) which generates a distance signal as a function of the distance traveled by the transplanter. In addition, root ball pinchers, indicated generally at 702 in FIGS. 3 and 5, will act in concert with the gate 510, to control the discharge of a root ball at selected time intervals. The right and left root ball pinchers 702 are mounted on the upper edge of the right and left upper side plates 516 and 518, respectively. To this end, each of the root ball pinchers includes a L-shaped bracket 706 secured to a bar 708 secured to an upper end of the side plate 516 or 518. The cylinder 710 of a double acting air cylinder assembly is secured to the L-shaped bracket 706, the rod 712 of the cylinder passing through the bracket 706, the root ball pinchers 702 being secured to the end of the rod 712. Each root ball pincher includes a flared pressure plate 716 mounted on a block 718, which is in turn secured to the rod 712. Simultaneous actuation of the cylinder assemblies 710, 712 will cause opposed root ball pinchers in the form of the pressure plates 716 to either move towards each other to pinch and hold the root balls from further movement, or to release the root balls so that they can be advanced, FIG. 3 showing the root ball pinchers in their retracted position, and FIG. 5 showing the root ball pinchers in their root ball holding position.

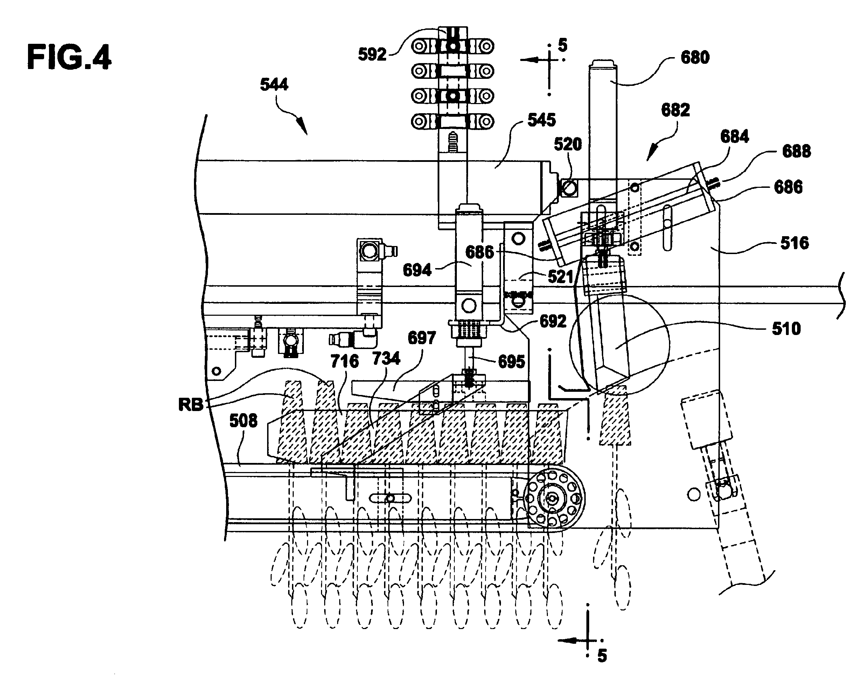

In operation, the cylinder assemblies 710 will be operated at substantially the same time to extend the pressure plates 716 into engagements with the sides of the root balls, and, at the same time, the cylinder assemblies 694 will be operated simultaneously to force the longitudinally extending member 697 into contact with the bottom of the inverted root balls RB which are between the pressure plates 716 to compress the root balls RB along their length. As can be seen from FIGS. 2 and 4, not all root balls are compressed, but the ones nearest the cut-off gate 510 are. At or near the full extension of the cylinder assemblies 694 and 710 the cylinder assembly 680 will be retracted to permit the leading seedling to be discharged to the disks 703. It should be noted that the timing to the cylinders 694 and 710 is coordinated with the timing of the gate cylinder assembly 680. After the leading root ball has been discharged, all of the cylinders 680, 694, and 710 will be moved to their initial position.

### PLANT DELIVERY SYSTEM

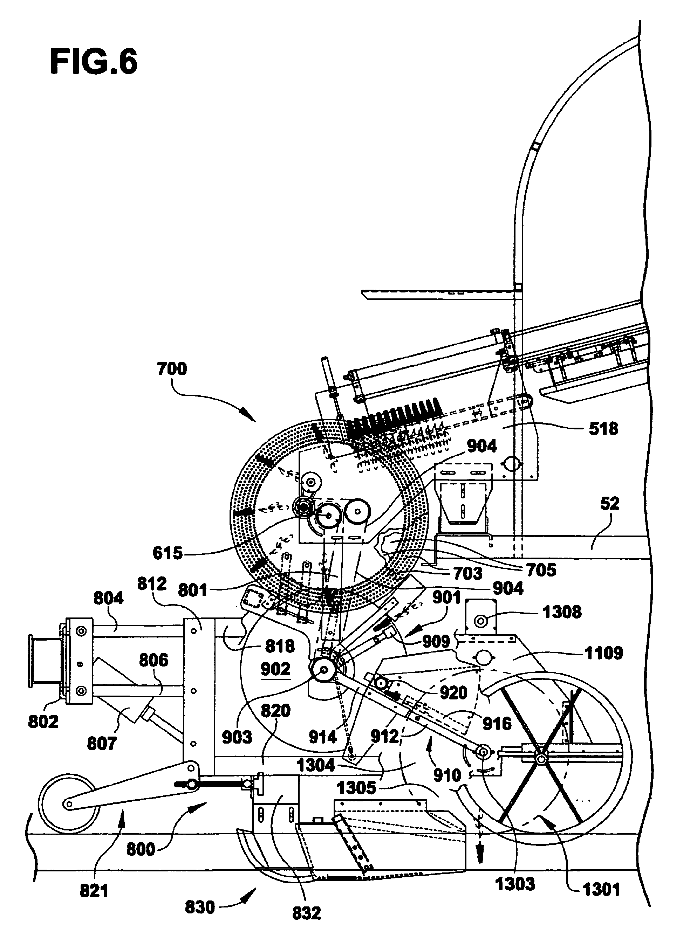

In accordance with this invention a plant delivery system is provided which maintains 100% control of the seedlings after they leave the cut-off gate 680 of the gap eliminating mechanism. Thus there is provided an inverter disk assembly indicated generally at 700 and which is supported on shaft 615 (FIG. 6), a middle plant transition disk assembly 901 carried by arms which extend downwardly from shaft 615, and a row unit disk assembly 1301 carried by the planter subassembly 800. The shaft 615 is carried by the transplanter subframe 52, the shaft 615 and gap-up belts 506, 508 being driven by a DC motor in the same manner as shown and described in US-2009-0031935-A1.

As best shown in FIG. 6, the inverter disk assembly 700 consists of a pair of flexible outer disks 703 and a pair of flexible inner disks 705, which are of a lesser diameter. Means are provided to move the periphery of each of the pairs of disks towards and away from each other as they are rotated in a counter clockwise direction as viewed in FIG. 6. Thus, the periphery of the outer disks, when in the 12 o'clock position (i.e. the position corresponding to 0° or vertically above the axis of rotation), will be moved towards each other to grasp each discharged root ball. The root balls are caused to be rotated to the 7 or 8 o'clock position (i.e. the position rotated in a clockwise direction by approximately 210° to 240° with respect to the 0° position) with the outer disks 703. At this location the periphery of the inner disks 705, which are rotating at the same speed as the outer disks, will be moved towards each other to capture and/or pinch the plant foliage of each seedling. After a little more rotation, the periphery of the outer disks 703 will forced apart to release the root ball. To this end, the side plates 516, 518 and each of the arms 801 carries supports for rollers and shields which will cause the disks 703 and 705 to open and close at the appropriate times, the rollers preferably being carried by suitable leaf springs. It is a feature of this invention that the pair of outer disks 703 is formed of high density polyethylene plastic which have their outer periphery formed with many apertures as shown in FIG. 6 for the purpose of providing a more flexible and aggressive surface.

The middle plant transition disk assembly 901 includes a pair of high density polyethylene plastic disks 902 secured to rotatable shaft 903 for clockwise rotation therewith. The shaft 903 is carried by a pair of fixed length swing arms 801 which are journalled at their upper ends on the shaft 615 and at their lower ends to shaft 903. The shaft 903, including the disks mounted on it, has its speed synchronized to the inverter disk assembly 700. To this end, it is caused to be driven by a chain or cogged belt 904 which passes over suitable drive, driven, idler, and tensioning sheaves, which are not numbered. As shown, the drive sprocket or sheave is supported on shaft 615, the idler and tensioning sheaves are supported on side plate 518, and the driven sheave is keyed to the shaft 903. Rollers and shields will cause the disks 902 to open and close at the appropriate times. A foliage shield located at approximately the 11 o'clock position (i.e. the position rotated in a clockwise direction by approximately 330° with respect to the 0° position) as seen in FIG. 6 will cause the disks 902 to be spread apart for the reception of the root balls carried by the disks 703. Meanwhile, as set forth above, the disks 703 are being spread apart as they approach the 6 o'clock position (i.e. the position rotated in a clockwise direction by approximately 180° with respect to the 0° position), releasing the root balls for transfer, and during the same time the inner pair of disks 705 will engage the stem and foliage of the seedling to insure that the seedling is under control during the transfer. As the rollers 902 approach the 1 or 2 o'clock position (i.e. the position rotated in a clockwise direction by approximately 30° to 60° with respect to the 0° position) the rollers 909 on leaf springs will force the disks 902 towards each other while a shield (not shown) causes the inner inverter disk 705 when it reaches the 5 o'clock position (i.e. the position rotated in a clockwise direction by approximately 150° with respect to the 0° position) to be spread apart, thereby releasing the foliage of the root ball being transferred to the middle plant transition disk assembly.

A pair of telescoping lower drag link assemblies 910 is also secured at their upper ends to shaft 903 and its lower end to the shaft 1303. This structure is necessary to deal with the up and down movement of the of the row unit, or planter frame subassembly, 800, as adjustments may be necessary to deal with seedlings of differing heights.

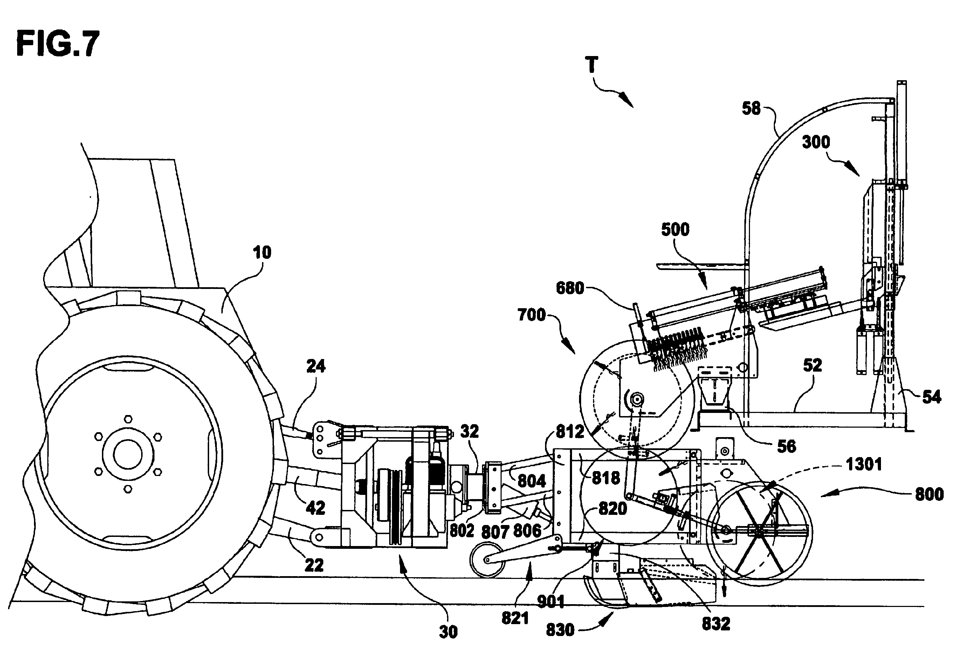

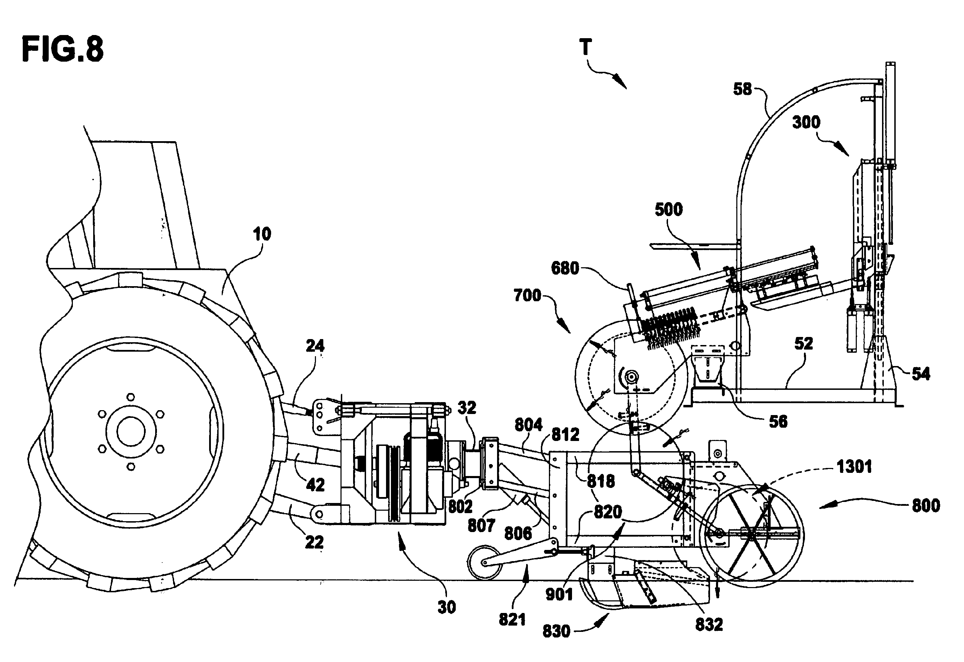

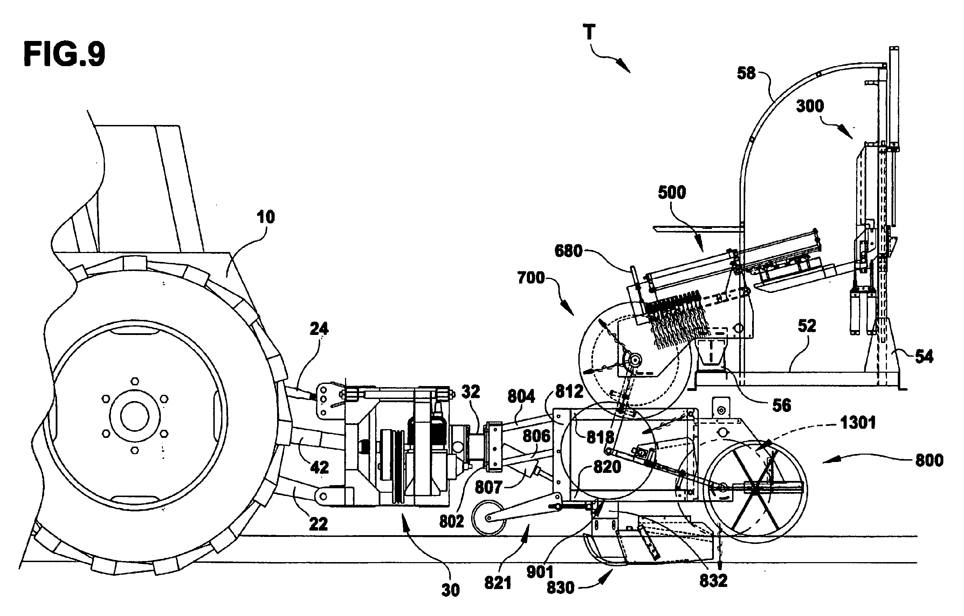

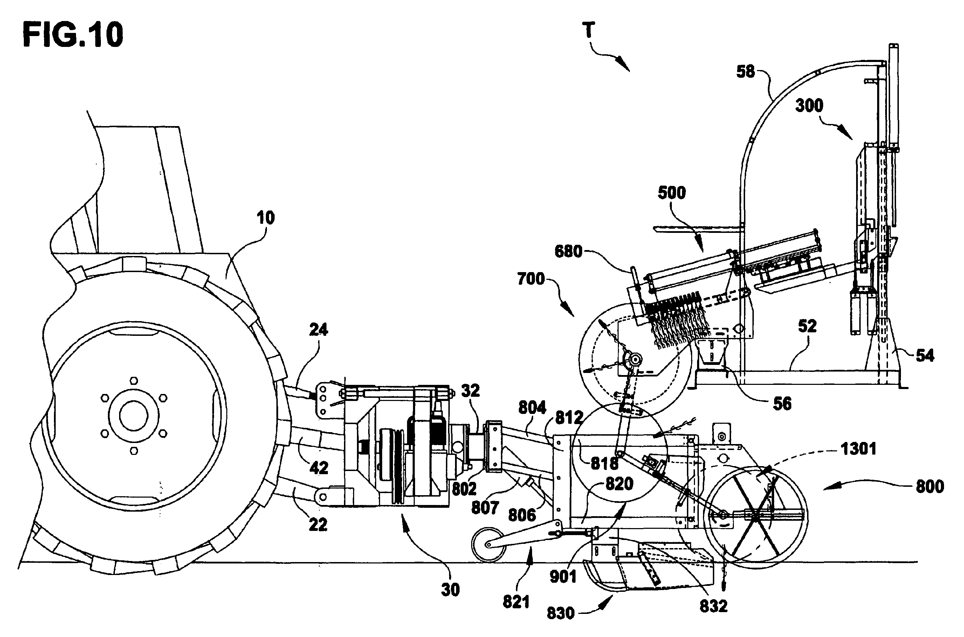

The row unit planter frame subassembly 800 is adapted to be secured to the tool bar 32 shown in FIG. 1. The subassembly, which is more fully disclosed in US-2009-0031935-A1, includes a mounting weldment 802 secured to the tool bar in any conventional manner. Upper and lower parallel links 804 and 806 are pivotally secured to the weldment, and the rear ends of the upper and lower links are pivotally secured to a further weldment 812. Upper and lower rearwardly extending structures 818 and 820, respectively, are secured to the weldment 812. In addition a cylinder 807 is mounted between the weldment 802 and the weldment 812 for the purpose of applying either a raising or a lowering force to the weldment 812. A soil conditioning unit, indicated generally at 821, is pivotally secured to the lower end of weldment 812. The height of the soil conditioning unit can be adjusted by a screw mechanism (no number). A furrow opener 830 is secured to the lower rearwardly extending structure 820 by a vertical bar 832. The furrow opener is of a generally V shaped construction, the apex of the V being to the forward side, and the spaced apart sides of the V being flared to the upper side. As can be seen from a comparison of FIGS. 7-10, the planter subassembly can be moved to a raised position, as shown in FIGS. 7 and 9, or to a lowered position when planting in a flat field as shown in FIGS. 8 and 10.

Each of the telescoping lower drag link assemblies 910 includes telescoping tubular portions 912 and 914 which are caused to move relative to each other by a suitable mechanism 916, which causes telescopic movement. One of the tubular portions 914 has an end portion journalled about shaft 903, and the other tubular portion has an end portion journalled about shaft 1303, shaft 1303 being journalled to the planter subframe 800. Each of the forward tubular portions carries a foliage shield and also carries a vectoring air knife 920 which blows the foliage and stem of the root ball away from the disks 902 to straighten the foliage to facilitate a hand-off to the disk assembly 1301 which include a pair of planting disks 1304, 1305. The drive for the disks includes a motor 1308 mounted on side plates 1109. The speed of the motor is proportional the speed of a ground wheel and is controlled in a manner more fully set forth in published U.S patent application US-2009-0031935-A1. The disks 1304 and 1305 may be made of high density polypropylene, aore they may be made of fiber reinforced rubber.

As can be seen from a comparison of FIGS 7 - 8 with FIGS. 9 - 10 the distance between the disk assembly 901 and the disk assembly 1301 may be varied. Thus, FIGS. 7 and 8 show the distance between the disk 901 and 1301 when planting seedlings with 5 inch tall plants, and FIGS. 9 and 10 showing the disk positions when planting seedlings with 9 inch tall plants. As can be seen the disks 902 will be moved forwardly within the planter subassembly 800 when planting seedlings having longer stems.

### SUMMARY

Plants are extracted from the tray and travel through the indexer up to the cut-off gate by the same method used on the original design. The inverter disc has been equipped with a pair of smaller diameter discs inside the original disc. When plants are discharged at the cut-off gate, the inverter disc grabs the root balls as normal. The inverter discs rotate the root ball to approximately the 7 or 8 o'clock position (i.e. the position rotated in a clockwise direction by approximately 210° to 240° with respect to the 0° position). At this location, the smaller diameter disc captures and pinches the plant foliage while the larger disc spreads apart allowing the root ball to hang free. Next, the middle transition discs capture the root ball and rotate the plant to the row unit planting disc. Vectoring air knives and shielding straighten the plant foliage to facilitate a hand-off to the row unit disc. To deal with the up and down movement of the row unit, the middle transition disc hangs on swing arms mounted from the inverter disc. Twin telescoping drag links connect the middle transition link to the row unit. An electric servo is coupled onto one of the telescoping drag links for changing stand off distance between the middle disc and the planting disc for different length plant stems. In operation, the middle transition disc swings forward as the row unit comes up and back as it drops, but always maintains the same plant hand off positions from disc to disc.

While a preferred form of this invention has been described above and shown in the accompanying drawings, it should be understood that applicant does not intend to be limited to the particular details described above and illustrated in the accompanying drawings, but intends to be limited only to the scope of the invention as defined by the following claims. In this regard, the terms as used in the claims are intended to include not only the designs illustrated in the drawings of this application and the equivalent designs discussed in the text, but are also intended to cover other equivalents now known to those skilled in the art, or those equivalents which may become known to those skilled in the art in the future.

## Claims

1. A transplanting method for transplanting seedlings grown in trays having a plurality of side-by side rows of seedling cells, which method plants the seedlings uniformly apart even though not all cells have seedlings, the method being **characterized by** the following steps:
- picking up an entire row of seedlings from a tray by engaging the stems of the seedlings, which row in the tray may have gaps between seedlings;
- transferring the seedlings to a mechanism which eliminates gaps between seedlings;
- maintaining control of each seedling as it is moved from the mechanism which eliminates gaps to the ground one at time with a desired spacing between the seedlings; whereby the seedlings are planted uniformly spaced apart in the ground.

2. A transplanting apparatus for transplanting seedlings grown in trays having a plurality of side-by side rows of seedling cells, which transplanting apparatus plants the seedlings uniformly apart even though not all cells have seedlings, the transplanting apparatus being **characterized by** the following:
- means (300) for picking up an entire row of seedlings from a tray by engaging the stems of the seedlings;
- means (500) for eliminating gaps between seedlings;
- means for discharging and planting the seedlings while maintaining control of the seedling as they are moved from the means (500) for eliminating gaps until they are planted.

3. The transplanting apparatus for transplanting seedlings as set forth in claim 2 wherein the means for discharging and planting the seedlings include
- an inverter disk assembly (700) which receives the seedling from the means (500) for eliminating gaps between the seedlings,
- a middle plant transition disk assembly (901) which receives the seedlings from the inverter disk assembly (700), and
- a row unit planting disk assembly (1301) which receives the seedlings from the middle plant transition disk assembly (901).

4. The transplanting apparatus for transplanting seedlings as set forth in claim 3 wherein the inverter disk assembly (700) consists of a pair of outer disks (703), and a pair of inner disks (705), the inner disks (705) having a smaller diameter than the outer disks (703).

5. The transplanting apparatus for transplanting seedlings as set forth in claim 4 wherein means are provided to cause the outer disks (703) to initially grasp the seedlings, and, as they are rotated to a 7 or 8 o'clock position, to release the seedlings immediately after the inner disks (705) have engaged the seedlings.

6. The transplanting apparatus for transplanting seedlings as set forth in claim 4 or 5 wherein the transition disks (901) extend between the outer disks (703) of the inverter disk assembly (700).

7. The transplanting apparatus for transplanting seedlings as set forth in one of claims 3 to 6 wherein the middle plant disk transition assembly (901) is carried by a fixed length upper swing arm (801) which swings about the axis of the inverter disk assembly (700), and a lower drag link (910) which is secured about the axis of the row unit planting disk assembly (1301).

8. The transplanting apparatus for transplanting seedlings as set forth in claim 7 wherein the length of the lower drag link (910) can be varied to accommodate seedlings of differing heights.

9. The transplanting apparatus for transplanting seedlings as set forth in claim 7 or 8 wherein the planting disk assembly (1301) is carried by a subframe (800) which may move towards and away from the inverter disk assembly.

10. The transplanting apparatus as set forth in one of claims 2 to 9 further including
- compressing means (692-697) located between the means (500) for eliminating gaps and the transferring means, which compressing means (692-697) compresses the root balls along their length and straightens-up tipped root balls and better orient them for extraction.

11. The transplanter apparatus as set forth in claim 10 wherein the means for transferring the seedlings includes a gate (510) movable between a lowered position where the (510) gate prevents a seedling from being discharged, and a raised position which permits a seedling to be discharged, the means for transferring the seedlings further including root ball pinchers (702) which act in concert with the gate (510) to control the discharge of a root ball at selected time intervals, and further including control means to operate the root ball pinchers (702) and the compressing means (692-697) simultaneously.

12. The transplanter apparatus as set forth in claim 10 or 11 wherein knives (734) are carried to the sides of the compressing means (692-697) for the purpose of cutting away trash that might be associated with the root balls.

## Patentansprüche

1. Umpflanzverfahren zum Umpflanzen von Setzlingen, welche auf Trays mit einer Mehrzahl nebeneinanderliegender Reihen von Setzlingsmulden gezogen wurden, wobei bei diesem Verfahren die Setzlinge in gleichmäßigen Abständen gepflanzt werden, selbst wenn nicht alle Mulden Setzlinge enthalten, wobei das Verfahren durch die folgenden Schritte **gekennzeichnet** ist:
- Aufnehmen einer ganzen Reihe Setzlinge von einem Tray durch Greifen der Stängel der Setzlinge, wobei diese Reihe auf dem Tray Lücken zwischen den Setzlingen aufweisen kann;
- Übergeben der Setzlinge an einen Mechanismus, welcher Lücken zwischen Setzlingen beseitigt;
- Aufrechterhaltung der Kontrolle jedes Setzlings, wenn er von dem Mechanismus, welcher Lücken beseitigt, jeweils vereinzelt mit einem gewünschten Abstand zwischen den Setzlingen zum Boden befördert wird; wodurch die Setzlinge in gleichmäßigen Abständen in den Boden gepflanzt werden.

2. Umpflanzvorrichtung zum Umpflanzen von Setzlingen, welche auf Trays mit einer Mehrzahl nebeneinanderliegender Reihen von Setzlingsmulden gezogen wurden, wobei diese Vorrichtung die Setzlinge in gleichmäßigen Abständen pflanzt, selbst wenn nicht alle Mulden Setzlinge enthalten, wobei die Vorrichtung durch Folgendes **gekennzeichnet** ist:
- Mittel (300) zum Aufnehmen einer ganzen Reihe Setzlinge von einem Tray durch Greifen der Stängel der Setzlinge;
- Mittel (500) zur Beseitigung von Lücken zwischen Setzlingen;
- Mittel zum Abgeben und Pflanzen der Setzlinge, wobei die Kontrolle der Setzlinge aufrechterhalten wird, wenn sie von dem Mittel (500) zur Beseitigung von Lücken weg befördert werden, bis sie gepflanzt sind.

3. Umpflanzvorrichtung zum Umpflanzen von Setzlingen nach Anspruch 2, wobei die Mittel zum Abgeben und Pflanzen der Setzlinge Folgendes umfassen:
- eine Umkehrscheibenanordnung (700), welche den Setzling von dem Mittel (500) zur Beseitigung von Lücken zwischen Setzlingen entgegennimmt,
- eine mittlere Pflanzen-Weiterleitungsscheiben-Anordnung (901), welche die Setzlinge von der Umkehrscheibenanordnung (700) entgegennimmt, und
- eine Reiheneinheit-Pflanzscheibenanordnung (1301), welche die Setzlinge von der mittleren Pflanzen-Weiterleitungsscheiben-Anordnung (901) entgegennimmt.

4. Umpflanzvorrichtung zum Umpflanzen von Setzlingen nach Anspruch 3, wobei die Umkehrscheibenanordnung (700) aus einem Paar äußerer Scheiben (703) und einem Paar innerer Scheiben (705) besteht, wobei die inneren Scheiben (705) einen kleineren Durchmesser als die äußeren Scheiben (703) aufweisen.

5. Umpflanzvorrichtung zum Umpflanzen von Setzlingen nach Anspruch 4, wobei Mittel vorgesehen sind, um zu veranlassen, dass die äußeren Scheiben (703) zunächst die Setzlinge ergreifen und, wenn sie in eine 7- oder 8-Uhr-Position rotiert sind, die Setzlinge sofort freigeben, nachdem die inneren Scheiben (705) die Setzlinge ergriffen haben.

6. Umpflanzvorrichtung zum Umpflanzen von Setzlingen nach Anspruch 4 oder 5, wobei die Weiterleitungsscheiben (901) zwischen den äußeren Scheiben (703) der Umkehrscheibenanordnung (700) verlaufen.

7. Umpflanzvorrichtung zum Umpflanzen von Setzlingen nach einem der Ansprüche 3 bis 6, wobei die mittlere Pflanzen-Weiterleitungsscheiben-Anordnung (901) von einem oberen Schwenkarm mit fester Länge (801) getragen wird, welcher um die Achse der Umkehrscheibenanordnung (700) schwenkt, und einer unteren Schleppkurbel (910), welche um die Achse der Reiheneinheit-Pflanzscheibenanordnung (1301) befestigt ist.

8. Umpflanzvorrichtung zum Umpflanzen von Setzlingen nach Anspruch 7, wobei die Länge der unteren Schleppkurbel (910) variiert werden kann, um Setzlinge unterschiedlicher Höhen aufzunehmen.

9. Umpflanzvorrichtung zum Umpflanzen von Setzlingen nach Anspruch 7 oder 8, wobei die Pflanzscheibenanordnung (1301) von einem Teilrahmen (800) getragen wird, welcher sich auf die Umkehrscheibenanordnung zu und von dieser weg bewegen kann.

10. Umpflanzvorrichtung nach einem der Ansprüche 2 bis 9, ferner aufweisend:
- Komprimiermittel (692-697), welches sich zwischen dem Mittel (500) zur Beseitigung von Lücken und dem Übergabemittel befindet, wobei dieses Komprimiermittel (692-697) die Wurzelballen der Länge nach komprimiert und geneigte Wurzelballen aufrichtet und besser für die Entnahme ausrichtet.

11. Umpflanzvorrichtung nach Anspruch 10, wobei das Mittel zum Übergeben der Setzlinge eine Sperre (510) umfasst, welche beweglich ist zwischen einer abgesenkten Position, wo die Sperre (510) die Abgabe eines Setzlings verhindert, und einer angehobenen Position, welche die Abgabe eines Setzlings zulässt, wobei das Mittel zum Übergeben der Setzlinge ferner Wurzelballen-Klemmvorrichtungen (702) umfasst, welche mit der Sperre (510) zusammenwirken, um die Abgabe eines Wurzelballens in ausgewählten Zeitintervallen zu steuern, und ferner Steuermittel umfasst, um die Wurzelballen-Klemmvorrichtungen (702) und das Komprimiermittel (692-697) gleichzeitig zu betätigen.

12. Umpflanzvorrichtung nach Anspruch 10 oder 11, wobei Messer (734) an den Seiten des Komprimiermittels (692-697) getragen werden, um Abfälle wegzuschneiden, welche mit den Wurzelballen verbunden sein könnten.

## Revendications

1. Procédé de transplantation pour transplanter des plants mis à croître dans des plateaux ayant plusieurs rangées de cellules de plant situées côte à côte, lequel procédé plante les plants écartés de manière uniforme même si toutes les cellules n'ont pas de plant, le procédé étant **caractérisé par** les étapes consistant à :
- prélever une rangée entière de plants à partir d'un plateau par mise en prise des tiges des plants, laquelle rangée dans le plateau peut avoir des espaces entre les plants;
- transférer les plants à un mécanisme qui élimine les espaces entre les plants;
- maintenir la commande de chaque plant lorsqu'ils sont déplacés un à la fois, à partir du mécanisme qui élimine les espaces, vers le sol avec un espacement voulu entre les plants; de sorte que les plants sont plantés en étant écartés de manière uniforme dans le sol.

2. Appareil de transplantation pour transplanter des plants mis à croître dans des plateaux ayant plusieurs rangées latérales situées côte à côte de cellules de plant, lequel appareil de transplantation plante les plants de manière uniformément écartée même si toutes les cellules n'ont pas de plant, l'appareil de transplantation étant **caractérisé par** ce qui suit :
- des moyens (300) pour prélever une rangée entière de plants à partir d'un plateau par mise en prise des tiges des plants ;
- des moyens (500) pour éliminer des espaces entre les plants;
- des moyens pour décharger et planter les plants tout en maintenant la commande du plant lorsqu'ils sont déplacés depuis les moyens (500) pour éliminer des espaces jusqu'à ce qu'ils soient plantés.

3. Appareil de transplantation pour transplanter des plants selon la revendication 2, dans lequel les moyens pour décharger et planter les plants comprennent :
- un ensemble de disque inverseur (700) qui reçoit le plant provenant des moyens (500) pour éliminer des espaces entre les plants,
- un ensemble de disque de transition de plante médiane (901) qui reçoit les plants provenant de l'ensemble de disque inverseur (700), et
- un ensemble de disque de plantation d'une unité de rangée (1301) qui reçoit les plants provenant de l'ensemble de disque de transition de plante médiane (901).

4. Appareil de transplantation pour transplanter des plants selon la revendication 3, dans lequel l'ensemble de disque inverseur (700) est constituée d'une paire de disques extérieurs (703), et d'une paire de disques intérieurs (705), les disques intérieurs (705) ayant un diamètre plus petit que les disques extérieurs (703).

5. Appareil de transplantation pour transplanter des plants selon la revendication 4, dans lequel des moyens sont prévus pour amener les disques extérieurs (703) à saisir initialement les plants, et, lorsqu'ils sont tournés vers une position à 7 :00 ou 8:00 heures, libérer les plants immédiatement après que les disques intérieurs (705) aient mis en prise les plants.

6. Appareil de transplantation pour transplanter des plants selon la revendication 4 ou 5, dans lequel les disques de transition (901) s'étendent entre les disques extérieurs (703) de l'ensemble de disque inverseur (700).

7. Appareil de transplantation pour transplanter des plants selon l'une quelconque des revendications 3 à 6, dans lequel l'ensemble de disque de transition de plante médiane (901) est supporté par un bras basculant supérieur de longueur fixée (801) qui bascule autour de l'axe de l'ensemble de disque inverseur (700), et une bielle de traînée inférieure (910) qui est fixée autour de l'axe de l'ensemble de disque de plantation d'une unité de rangée (1301).

8. Appareil de transplantation pour transplanter des plants selon la revendication 7, dans lequel la longueur de la bielle de traînée inférieure (910) peut être modifiée pour accepter des plants de hauteurs différentes.

9. Appareil de transplantation pour transplanter des plants selon la revendication 7 ou 8, dans lequel l'ensemble de disque de plantation (1301) est supporté par un sous-châssis (800) qui peut se déplacer vers l'ensemble de disque inverseur et loin de celui-ci.

10. Appareil de transplantation selon l'une quelconque des revendications 2 à 9 comprenant de plus :
- des moyens de compression (692 à 697) situés entre les moyens (500) pour éliminer des espaces et les moyens de transfert, lesquels moyens de compression (692 à 697) compressent les pains racinaires le long de leur longueur et rangent les pains racinaires renversés et les orientent mieux pour extraction.

11. Appareil de transplantation selon la revendication 10, dans lequel les moyens pour transférer les plants comprennent une porte (510) mobile entre une position abaissée où la porte (510) empêche d'évacuer un plant, et une position relevée qui permet d'évacuer un plant, les moyens pour transférer les plants comprenant de plus des éléments pinceurs de pain racinaire (702) qui agissent en concert avec la porte (510) pour commander l'évacuation d'un pain racinaire à des intervalles de temps sélectionnés, et comprenant de plus des moyens de commande pour actionner simultanément les éléments pinceurs de pain racinaire (702) et les moyens de compression (692 à 697).

12. Appareil de transplantation selon la revendication 10 ou 11, dans lequel des couteaux (734) sont supportés sur les côtés des moyens de compression (692 à 697) dans le but de découper des impuretés qui pourraient être associées aux pains racinaires.
